# FASCICULE DE BREVET EUROPEEN

(11) **EP 1 301 958 B1**
(45) Date de publication et mention de la délivrance du brevet: **06.12.2006**
(21) Numéro de dépôt: 01965074.6
(22) Date de dépôt: 06.07.2001
(51) Int. Cl.: H01M 8/02, B01D 71/00

(54) **MATERIAU HYBRIDE, UTILISATION DUDIT MATERIAU HYBRIDE ET PROCEDE DE SA FABRICATION**
HYBRIDMATERIAL, VERWENDUNG DES HYBRIDMATERIALS UND VERFAHREN ZU SEINER HERSTELLUNG
HYBRID MATERIAL, USE OF SAID HYBRID MATERIAL AND METHOD FOR MAKING SAME

(30) Priorité: 07.07.2000 FR 0008933
(43) Date de publication de la demande: 16.04.2003
(73) Titulaire: FuMA-Tech Gesellschaft für funktionelle Membranen- und Anlagentechnologie mbH, 66386 St. Ingbert/Saar (DE)
(72) Inventeur: ROZIERE, Jacques, F-34090 Montpellier (FR); JONES, Deborah, F-34090 Montpellier (FR); TCHICAYA-BOUKARY, Lydie, F-13160 Chateaurenard (FR); BAUER, Bernd, 71665 Vaihingen (DE)
(74) Mandataire: Patentanwälte Ruff, Wilhelm, Beier, Dauster & Partner
(86) Numéro de dépôt international: PCT/EP2001/007774
(87) Numéro de publication internationale: WO 2002/005370

(56) Documents cités:
- EP-A- 0 631 337
- WO-A-00/66652
- WO-A1-01/92383
- US-A- 5 523 181
- LACONTI A B ET AL: "PROTON EXCHANGE MEMBRANE ELECTROCHEMICAL CAPACITORS AND FUEL CELLS FOR PULSE POWER APPLICATIONS" PROCEEDINGS OF THE INTERNATIONAL POWER SOURCES SYMPOSIUM,US,NEW YORK, IEEE, vol. SYMP. 35, 22 juin 1992 (1992-06-22), pages 298-301, XP000342087 ISBN: 0-7803-0552-3

## Description

La présente invention concerne un matériau hybride, son utilisation et un procédé de sa fabrication.

Parmi les piles à combustible celles qui présentent le plus d'intérêt dans des applications concernant le secteur automobile, sont les piles à combustible à électrolyte solide polymère.

Dans un pile à combustible à électrolyte solide, l'électrolyte solide polymère est une membrane échangeuse protonique. De telles membranes doivent présenter une faible perméabilité aux gaz réactants (par example H₂; CH₄ et O₂) et un rendement électrique et catalytique maximal. Elles doivent aussi posséder des propriétés de conduction adéquates et une chute ohmique minimale sous haute densité de courant.

Des matériaux pouvant servir comme base pour de telles membranes doivent principalement disposer des propriétés chimiques et électrochimiques suivantes : stabilité de la matière plastique en milieu réducteur, stabilité à l'oxidation et stabilité à l'hydrolyse. La membrane doit donc présenter une bonne stabilité hydrothermale. L'utilisation d'ionomères acides perfluorés tel que par exemple le NAFION® a été proposée comme membrane échangeuse de proton dans ces applications.

PCT WO-A-01/92383 concerne des membranes pour piles à combustible à partir d'une composition polymère d'un polymère d'acide sulfonique perfluoré et un autre polymère.

WO-A-00/66652 décrit une membrane composite constituée d'un support poreux non-conducteur, imprégné d'un matériel conducteur et fourni de couches protectrices sur deux côtés.

US-A-5523181 concerne une composition d'électrolyte solide polymère composée d'une résine d'échange d'ions et des particules de silice y dispersées.

EP-A-631337 concerne une composition d'électrolyte solide polymère composée d'une résine d'échange d'ions et un catalyseur métallique.

Laconti et al. (IEEE, SYMP. 35 (1992), 298-301) détaillent condensateurs électrochimiques de capacité supérieure comprennant oxyde de ruthenium en fonction d'électrode dans un électrolyte ionomère.

Pour beaucoup de membranes la conductivité de la membrane est très sensible au degré d'hydratation. Soumis à des températures croissantes et à des températures proches de la température d'ébullition de l'eau, on rencontre le problème dû à la déshydratation décroissante de la membrane, une diminution de sa conductivité électrique et, en même temps une augmentation de la perméabilité au transfert de combustible. Cela conduit à une diminution de la performance voire une dégradation de la membrane.

Il y a par contre de nombreux avantages associés à l'augmentation de la température de fonctionnement d'une pile à combustible à membranes échangeuses de protons : pour les applications stationaires, la cogénération de chaleur peut s'avérer utile. Pour l'utilisation comme source d'énergie motrice d'un véhicule, tels que des véhicules routiers et plus particulièrement les voitures, l'utilisation des piles à combustibles travaillant à plus haute température permet la réduction de la capacité de dissipation thermique du système de refroidissement et donc une diminution de son encombrement. Une diminution de l'encombrement facilite son intégration dans le véhicule et diminue son prix.

L'objet de la présente invention est de fournir un matériau pour développer des membranes thermostables susceptibles d'être utilisés dans des dispositifs électrochmiques fonctionnant à des températures supérieures à 90 °C.

Le but de la présente invention est réalisé par un matériau hybride comportant un polymère ayant des groupes acides, ce matériau hybride contenant un composant oxyde métallique disposant d'au moins deux MeₓO_{y} par molécule, chaque molécule du composant oxyde métallique contient au moins un groupement fonctionnel basique dû à un groupe contenant de l'azote, le composant oxyde métallique est formé de particules d' oxyde métallique, permettant une interaction et une relation spatiale avec les groupes acides du polymère.

Le matériau hybride est en particulier une matrice polymère. Il est préférable que les composants métal oxyde sont des composants de métaux du groupe IV, et là surtout du SiO₂. Sans perte de généralité dans la suite les explications sont données pour le cas de SiO₂. Il est possible d'utiliser d'autre métal oxydes à la place de SiO₂.

Il s'agit d'un matériau hybride de matériau polymère ayant des groupes acides. Ce matériau hybride contient un composant d'au moins deux SiO₂, chaque molécule de ce composant étant fixée directement ou indirectement au matériau polymère en respectant une relation spatiale par rapport à un groupe acide.

Il est préférable que les groupes acides soient formés par des groupes sulfoniques. De plus il est préférable que le matériau polymère acide soit un polymère organique. Il peut particulièrement s'agir d'un polymère organique exempt de fluor.

Le matériau peut être formé d'un polymère comme par exemple une polysulfone sulfonée ou une polyarylethercétone sulfonée. Des exemples de polyaryléthercétone sulfoné sont les polyéthercétones sulfonés tels que le PEK-s, PEEK-s, PEEKK-s, PEKK-s et PEKEKK-s. Un exemple de polysulfone qui peut être sulfoné est commercialisé sous le nom Udel (R). On peut aussi utiliser d'autres matériaux polymères sulfonés tel qu'un polyéthersulfone sulfoné (p. e.: Victrex PES (R) sulfoné) un polyphényléthersulfone sulfoné (PPSU-s, p. e. Radel (R) sulfoné), un styrène/éthylène-copolymère sulfoné (SES-s) ou un styrène/butadiène-copolymère sulfoné (SBS-s, SIS-s, p. e.: Kraton (R) sulfoné).

Les deux composants inorganiques peuvent être formés à partir de précurseurs comportant des fonctions hydrolysables permettant une copolymérisation. L'un de ces composants peut être constitué par un alcoxyde métallique (RO)ₓM et l'autre par un alkoxysilane fonctionnalisé (R'O)₃SiR" ou (R'O)₂SiR₂". Les groupes fonctionnels sont les groupes R". R et R' peuvent être des groupes alkyles identiques ou différents. Les groupes alkoxy peuvent être linéaires, tels que les groupes alkoxydes primaires (ex. méthoxy, propoxy), ou secondaires (ex. isopropoxy). Il est préférable que les groupements R" possèdent un caractère basique. Ces groupements contiennent des chaînes alkyles ou aryles et comportent une fonction basique, de préférence incluant un atome d'azote. Il peut s'agir d'un groupe amine. Alternativement, un des composants inorganiques peut être introduit sous forme de petites particules d'oxyde métallique. Il peut être utile, sans que ce soit essentiel, que fonction basique soit localisée à une extrémité du groupement R".

Pour un tel matériau il est possible de contrôler ses propriétés en faisant varier le rapport entre le nombre de groupes acides du matériau polymère et le nombre de groupes à caractère basique du composant inorganique Si le nombre de groupes à caractère basique est inférieur au nombre du groupes acides de la matrice polymère, le matériau hybride dispose de groupes acides libres qui peuvent exercer une certaine fonction.

Le composant inorganique du matériau hybride est formé de particules d'oxyde métallique ayant à leur surface au moins localement un caractère basique. Ce caractère basique est de préférence dû à des groupes basiques à la surface de la particule. Selon une forme de réalisation préférée de l'invention le diamètre des particules d'oxyde métallique est inférieur à 50 nm. Il est plus préférablement inférieur ou égal à 10 nm.

Il peut s'agir par exemple d'une particule de silice qui est enrobée d'une couche monomérique de molécules disposant d'un groupe à caractère basique. Le groupe à caractère basique contient un atome d'azote et il peut s'agir particulièrement d'un groupe amine. Un exemple de molécules qui peuvent enrober une particule de silice par une couche monomérique est par exemple l'aminophényltriméthoxysilane (APTMOS).

Dans un matériau hybride selon l'invention, la relation spatiale entre la matrice polymère et la partie inorganique est due à une interaction forte. Cette interaction forte est constituée en particulier par une interaction ionique entre le groupement fonctionnel du polymère et un groupement fonctionnel de la partie inorganique. Cette interaction ionique est due au transfert de proton du groupe acide du polymère au groupe basique de la partie inorganique. Un matériau hybride selon l'invention présente de préférence une distribution homogène de la partie inorganique. Un effet bénéfique pour l'utilisation du matériau comme membrane d'une pile à combustible est que le transfert de gaz combustible à travers la membrane est restreint. Cela est surtout valable pour des piles à combustibles travaillant directement au méthanol. Cet effet là est encore amélioré si une distribution régulière de la partie inorganique est réalisée.

Un matériau selon l'invention peut avoir une teneur en oxyde métallique entre 1 % -masse et 50 % -masse. La teneur en oxyde métallique est de préférence entre 6 % et 20 % -masse voir entre 6 % Et 10 % -masse. Les pourcentages donnés se rapportent aux mesures pondérales et ne se rapportent pas à des pourcentages de masse molaire.

Un matériau selon l'invention peut aussi être formé par un substrat inorganique interpénétré par le polymère, si la teneur en métal oxyde est relativement grande. On obtient alors une autre structure spatiale du matériau. Le matériau dispose donc d'un substrat inorganique - le substrat étant formé par le métal oxyde - et le polymère qui est intercalé.

L'intercalage du polymère dans le substrat inorganique nu peut se faire en absence d'une intégration préalable du support poreux par le polymère ionique. Il peut s'agire d'une formation directe des deux structures spatiaux intercalées qui a lieu en même temps.

Un tel matériau hybride se forme surtout si la teneur en métal oxyde est entre 30 % à 60 % masse. La teneur en métal oxyde se trouve surtout dans le domaine allant de 40 % à 50 % masse.

Selon l'invention il est avantageux si le matériau hybride comporte un substrat inorganique poreux avec un polymère conducteur ionique placé à l'intérieur des pores du substrat. Dans le cas d'une utilisation du matériau comme membrane conductrice, la conductivité à travers la membrane dépend principalement du nombre de canaux ou de pores permettant un transport d'ions, par exemple des noyaux atomiques hydrogènes (protons), à travers la membrane. Le nombre de canaux est surtout dépendant de la teneur en métal oxyde du matériau.

Selon l'invention le substrat inorganique d'un tel matériau est le produit d'une co-condensation d'un tetraalcoxyde de métal et d'un trialcoxymétaloxide fonctionnalisé. Comme décrit préalablement, le métal peut être constitué par le silicium. Cette co-condensation peut surtout avoir lieu en présence d'un polymère ionique. Ce polymère ionique peut surtout appartenir à la famille des polymères conducteurs ioniques ou ionomères aromatiques ou des ionomères hétérocycliques.

Le substrat inorganique est de préférence poreux et peut être le produit d'une co-condensation dans une solution de polymère de tetraalcoxysilane et de trialcoxysilane fonctionnalisé par des groupes organiques basiques en présence d'un ionomère. Le polymère ionique peut être choisi parmi les éléments du group des ionomères sulfonés, phosphorés ou carboxylés. Il peut s'agir plus particulièrement d'un polyéthercétone sulfoné.

Les groupes organiques basiques du trialcoxymétal (trialcoxysilane) fonctionnalisés par ce groupe basique sont de préférence choisis parmis les groupes alkyles ou acrylamino. Plus particulièrement il peut s'agir d'aminophenyltrialcoxysilane. Un exemple d'un tel aminophenyltrialcoxysilane est l'aminophenyltrimethoxysilane (APTMOS). Les groupes alcoxy peuvent être choisis parmis les membres du groupes méthoxy, ethoxy et butoxy.

Un matériau hybride selon l'invention est surtout caractérisé en ce que le substrat inorganique poreux comporte une micro infrastructure interpénétrée avec le conducteur ionique. La micro infrastructure est surtout présente sous forme de pores, la taille des pores se trouvant dans le domaine des structures nanométriques. La taille des pores se situe de préférence entre 1 nm et 10 nm. Plus particulièrement la taille des pores se trouve dans le domaine entre 2 et 7.5 nm. Elle peut même se trouver à l'intérieur du domaine allant de 3 à 6 nm.

On peut aussi caractériser la structure du substrat inorganique par sa surface spécifique. L'évaluation de la surface spécifique peut se faire selon la méthode BET, une méthode standardisée pour l'évaluation de surface des matériaux poreux. Si on élimine la partie organique par combustion, on obtient des valeurs pour la surface qui se situent entre 200 et 1200 m²/g⁻¹. De préférence la surface spécifique déterminée par la méthode précitée se trouve entre 300 et 900 m²/g⁻¹.

En outre les matériaux ainsi formés selon l'invention sont d'une apparence transparente et flexible. La plupart des matériaux disposent d'une robustesse mécanique assez grande.

Une propriété des matériaux hybrides disposant d'une structure inorganique poreuse est le fait qu'il présentent une conductivité ionique égale ou très voisine de celle du polymère sulfoné d'environ 0,001 Scm⁻¹ à environ au moins 0,1 Scm⁻¹.

La fabrication de membranes et surtout la fixation des membranes de ce matériau sur des supports fonctionnels est facilitée si le matériau est présent sous forme de solution. Un matériau selon l'invention peut être présent en forme dissout dans un solvant polaire de préférence aprotique. Des exemples de tels solvants sont le diméthylformamide (DMF), le diméthylacetamide (DMAc), le diméthylsulfoxide (DMSO) et surtout le N-methyl-2-pyrrolidone (NMP).

Le matériau hybride selon l'invention peut être une membrane, de préférence une membrane servant au transport cationique, plus particulièrement il peut être utilisé comme membrane dans une pile à combustible de type PEM (proton exchange membrane), aussi bien que de type DMFC (direct methane fuel cell). De telles membranes peuvent aussi être utilisées dans tout autre processus d'électrolyse, électrodialyse.

Une pile à combustible selon la présente invention est une pile à combustible disposant d'une membrane qui est composée d'un matériau hybride selon l'invention. Une telle pile à combustible peut directement travailler avec du méthanol comme combustible. Le point de travail peut se situer à des températures au delà de 90 °C voir au delà de 110 °C et même au delà de 130 °C.

Un procédé de fabrication d'un matériau hybride selon l'invention est caractérisé en ce que le matériau polymère disposant de groupes acides est melangé avec le composant oxyde métallique et/ou avec des précurseurs du composant en présence d'au moins un solvant, le composant oxyde métallique et/ou au moins un de ses précurseurs disposant d'un groupe fonctionnel basique permettant une interaction avec un groupe acide du matériau polymère, de manière à ce que l'interaction et/ou la formation du composant oxyde métallique a lieu en proximité immédiate du groupe acide.

Selon un mode de réalisation préféré de ce procédé, le polymère est mis en solution dans au moins un solvant, la mise en solution s'effectuant de préférence sous gaz inerte et particulièrement à une température d'environ 130 °C. Un exemple de gaz inerte pouvant être utilisé à la mise en solution du polymère est l'azote.

Il peut en outre être avantageux si le composant inorganique et/ou ces précurseurs sont mis en solution dans au moins un solvant et que les précurseurs du composant se trouvent dans la même solution d'au moins un solvant.

Une forme de réalisation préféré du procédé selon l'invention consiste à ajouter à une solution de polymère acide une solution contenant une dispersion de l'oxyde métallique et/ou une solution de précurseurs desdits composants. Une homognénéisation du mélange peut être effectuée.

Comme solvant peut être utilisé un solvant polaire aprotique et particulièrement le N-méthyl-2-pyrrolidone (NMP).

Une forme avantageuse de procédé de fabrication du matériau hybride est caractérisée en ce que la fixation et/ou la formation de la partie inorganique s'effectue selon une réaction sol-gel. Elle a lieu de préférence en présence d'eau et d'un catalyseur acide, organique ou minéral.

Selon une forme de réalisation du procédé selon l'invention un des précurseurs du composant peut servir comme point de départ de la formation de chaînes. La formation de chaînes peut être réalisée par exemple par une polycondensation. La polycondensation peut se dérouler soit entre des molécules du même précurseur ou alors entre ce précurseur et un autre précurseur. Un des précurseurs a une fonction de dispersant, une fonction d'initiateur de la formation des chaînes et une fonction de fixation de la chaîne au matériel polymérique.

Par exemple grâce à son caractère basique il peut interagir par exemple avec le groupe acide du polymère. Cette interaction a pour effet que la distribution dudit précurseur est orientée par la présence des groupes acides du polymère. Cet effet engendre une dispersion de ce composant. Les groupes hydrolysables du même précurseur permettent d'engendrer une réaction de formation de chaînes. Cette réaction de formation de chaînes peut se faire plus spécifiquement par polycondensation avec d'autre molécules du même précurseur ou alors des molécules d'un autre précurseur.

Un procédé selon l'invention peut être caractérisé par l'utilisation de précurseurs des composants inorganiques disposant d'un groupe basique. De préférence ce groupe basique contient de l'azote, plus particulièrement il peut s'agir d'un groupe amine. Ce groupe basique interagit avec un groupe acide du matériel polymérique. Un exemple de précurseur et l'aminophényltriméthoxysilane (APTMOS).

Dans un procédé selon l'invention un précurseur peut être le tetraéthoxysilane (TEOS). TEOS peut se fixer par exemple par polycondensation à APTMOS. Des chaînes oligo- ou polymériques avec plusieurs groupes SiO₂ peuvent s'arranger de manière à ce que des réseaux de SiO₂ se forment. Un tel procédé peut être réalisé à partir d'un rapport massique entre TEOS et APTMOS d'au moins de 70/30 (c'est à dire au moins 70 % masse TEOS et au plus 30 % masse APTMOS) et de préférence entre 80/20 et 95/5.

Un procédé selon l'invention peut être caractérisé en ce que la partie inorganique est une particule de SiO₂ disposant de groupes basiques à sa surface. Ces groupes basiques peuvent être disposés sur la surface de la particule par la condensation de molécules d'APTMOS avec les groupements silanol de la surface des particules. Dans un tel procédé il peut être préférable que le rapport massique entre les particules de silice et APTMOS soit plus grande que 60/40 (c'est à dire au moins 60 % en masse de silice et au plus 40 % en masse d'APTMOS) et plus préférentiellement entre 80/20 et 95/5. Un mode de réalisation préféré selon l'invention est un transfert des particules d'un solvant aqueux au solvant organique du polymère.

Un procédé selon l'invention peut comprendre la formation d'une membrane. La formation de la membrane peut particulièrement être réalisée par un procédé de coulée du mélange de matériel polymérique avec le composant inorganique et/ou les précurseurs du composant sur un support.

Un matériau selon l'invention peut également être obtenu par la co-condensation d'un tetraalcoxyde de métal (silicium) et de trialcoxymétal fonctionnalisé (trialcoxysilane) dans une solution de polymère conducteur ionique. La formation peut se faire comme un seul processus. Il est possible que le processus se déroule directement et en absence d'une imprégnation du substrat inorganique avec un polymère ionique. Le conducteur ionique appartient de préférence à une des familles de polymère conducteur ionique, ionomère aromatique ou ionomère hétérocyclique. Plus particulièrement il s'agit d'un ionomère sulfoné, phosphoré ou carboxylé. Le polymère conducteur ionique peut donc être choisi dans le group des ionomères sulfonés, phosphorés ou carboxylés et est plus particulièrement un membre de la famille des polyéthercétones sulfonés.

La co-condensation du matériau a surtout lieu dans un solvant aprotique de constante diélectrique relative élevée. La constante diélectrique relative est au moins supérieur à 37 et est de préférence supérieur à 45. La co-condensation de ces matériaux se fait surtout dans des concentrations élevées de la composante métal oxyde. La concentration de la composante métal oxyde se trouve surtout dans une domaine au dessus de 35 % et peut aller jusqu'à 60 %. Elle se trouve surtout dans le domaine entre 40 et 50 %. On produit alors des structures inorganiques poreuses à l'intérieur desquels la composante polymérique est interpénétrée par le réseau d'oxyde métallique.

Les matériaux selon l'invention disposent d'une stabilité thermique allant au moins dans le domaine de 90 à 160°C et peuvent comprendre aussi le domaine de température de 120 à 175°C.

Dans la co-condensation la fabrication d'une membrane peut comprendre la formation d'un mélange de polymère ionique est de précurseurs siliciées dans un solvant commun et la formation d'une membrane à partir de ce mélange par coulée ou extrusion. Le solvant peut alors être évaporé à la température ambiante ou en chauffant à des températures allant jusqu'à 90 °C. Cela permet de facilement créer des membranes même de grande dimension.

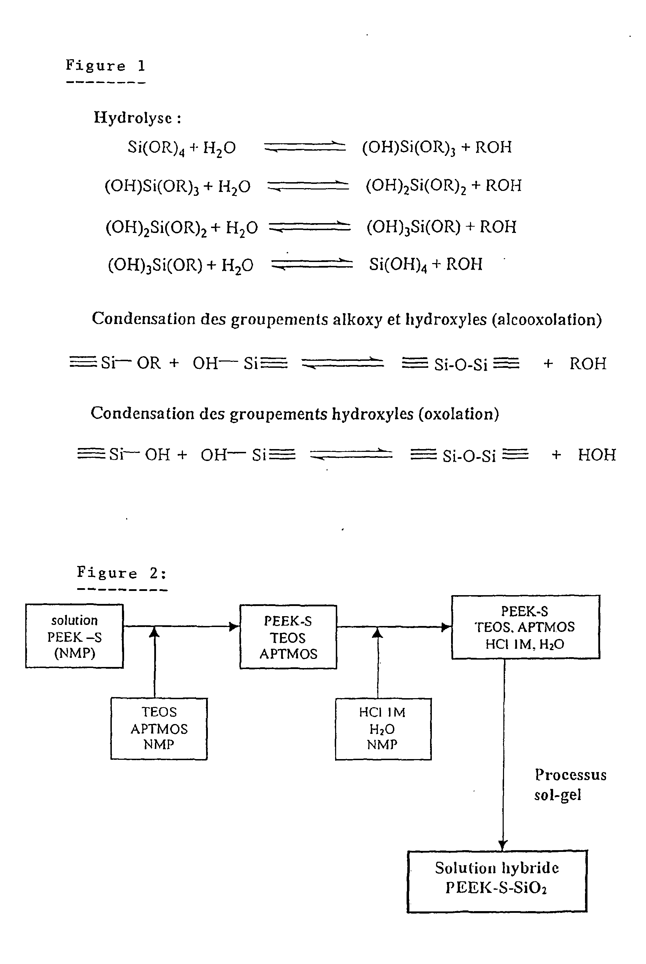

Des matériaux polymères hybrides selon l'invention sont des hybrides entre des polymères organiques et des oxydes minéraux. Ces matériaux combinent au sein du même matériau composite, de façon complémentaire, des propriétés de chacun des composants. Une méthode de fabrication de tels matériaux hybrides peut selon l'invention consister en l'utilisation d'un procédé sol-gel pour obtenir une dispersion entre la phase polymère organique et la phase inorganique à l'échelle moléculaire ou nanométrique. De tels processus sol-gel permettent la préparation de matériaux dispersés, issus de la croissance de polymères oxo-métalliques dans un solvant. La réaction est généralement divisée en deux étapes: hydrolyse d'alcoxyde métallique, qui aboutit à la création de groupes hydroxyles, suivi de la polycondensation des groupes hydroxyles et des groupes alcoxy pour former un réseau tridimensionel. Un schéma général d'un tel processus est donné sur la figure 1. Ce schéma illustre la polymérisation d'un alcoxyde de silicium et peut être utilisé selon l'invention. Dans le cas d'un alcoxyde de métal autre que de silicium, tel que le titane ou le zirconium, l'hydrolyse et la condensation ne requièrent pas de catalyseur, du fait que la réactivité élevée de l'alkoxyde. Par contre, dans le cas d'un alcoxyde de silicium comme représenté dans la figure 1, le processus sol-gel est catalysé en milieu acide- ou basique. Dans le cadre de l'invention le silicium peut être substitué par Ti ou Zr. Afin de faciliter le langage des revendications on a utilisé le terme SiO₂. Il est donc possible de remplacer le terme SiO₂ dans le texte par "SiO2 ou TiO₂ ou ZrO₂".

Dans la suite, la réalisation de l'invention est aussi représentée à l'aide des groupes d'exemples suivants.

### 1er groupe exemples:

### Système PEEK-s-TEOS-APTMOS

Un matériau hybride selon l'invention peut être un PEEK-s-silice et il peut être obtenu à partir du polymère PEEK sulfoné et à partir des précurseurs TEOS et APTMOS. On réalisera à l'hydrolyse et la co-condensation acido-catalysée de TEOS et d'APTMOS. Ces précurseurs, dont l'APTMOS a la fonction dispersante, sont ajoutés à la solution de polymère. La croissance de particules de silice, c'est-à-dire la réaction de polycondensation, intervient au coeur de la solution. Un exemple du procédé d'obtention d'un matériau hybride est représenté sur la figure 2. Une solution à 10 % en poids de PEEK sulfoné dans le N-méthylpyrrolidone (NMP) est préparée par solubilisation du polymère à 130 °C sous azote, puis filtrée. TEOS et APTMOS sont mis en solution dans NMP et ajoutés à la solution de polymère. Le mélange est maintenu sous agitation jusqu'à homogénéisation, puis sont ajoutées les quantités requises d'eau et d'acide chlorhydrique à 1M, en solution dans NMP. La solution est alors chauffée sous agitation jusqu'à 60 °C, jusqu'à obtention d'une solution homogène, à partir de laquelle on procède au coulage de la membrane, selon le processus habituel.

Dans cette préparation on peut faire varier deux paramètres:
i. le pourcentage en masse de silice dans la membrane hybride, et
ii. le rapport massique précurseur/dispersant (TEOS/APTMOS).

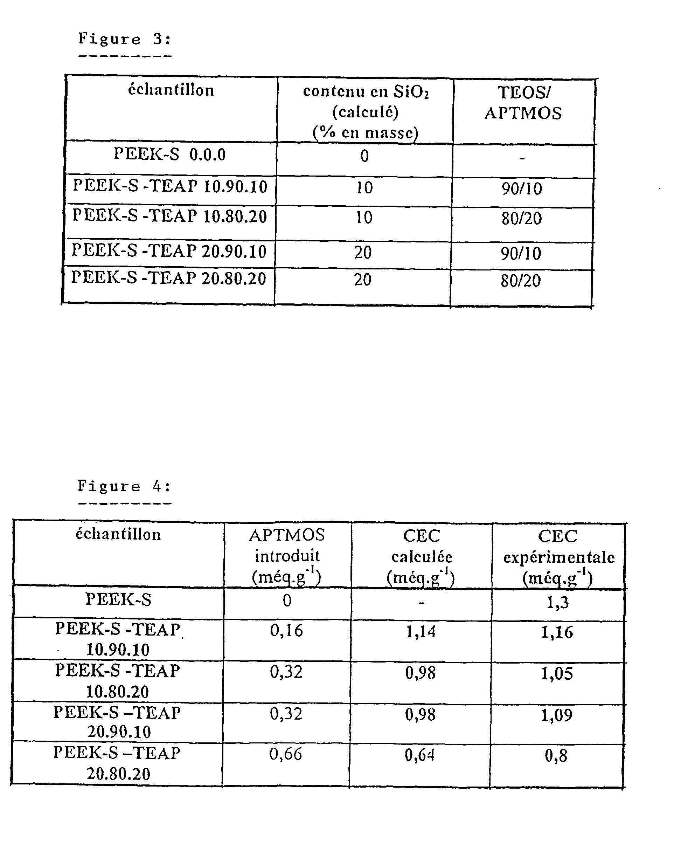

La figure 3 donne la composition de plusieurs exemples de matériaux polymères hybrides qui sont présentés par la suite. Les échantillons correspondant à ces exemples sont notés PEEK-S-TEAP x.y.z avec
i. x = % mass SiO₂ (dans l'hypothèse d'une conversion complète des silanes en silice), et
ii. y/z = le rapport massique entre le précurseur et le dispersant (TEOS/APTMOS).

La formation de membranes utilisées pour différentes caractérisations peut se faire par préparation habituelle de coulée de la solution. Le solvant (NMP) peut être évaporé sous vide à une température d'environ 100 °C pendant une durée de 4 heures. Les films de matière polymérique hybride sont ensuite détachés de leur support par immersion dans l'eau. Un traitement des films par une solution diluée d'acide chlorhydrique peut alors suivre afin d'éliminer toute trace de solvant. On dispose alors de la membrane dans sa forme protonnée.

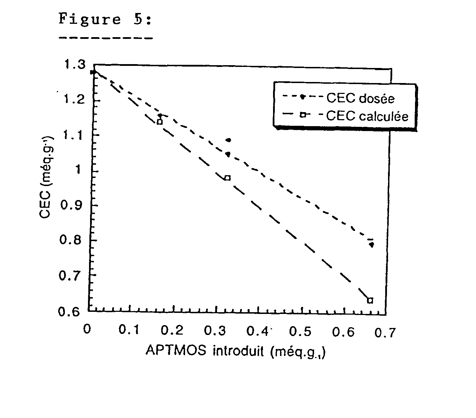

La capacité d'échange cationique des membranes de PEEK-S-silice peut être mesurée par dosage acido-basique. Des échantillons en forme acide sont traités par une solution saturée de NaCl, à 90 °C pendant 3 heures. Les protons libérés dans la solution sodique sont dosés par titrage par une solution de NaOH 0,1 M. La capacité d'échange cationique(cec) du matériau, exprimé en méq/g est calculée comme le nombre de protons dosés par rapport à la masse d'échantillon de PEEK-s-silice déshydraté. Sur le diagramme de la figure 5 est représenté la capacité d'échange cationique (CEC) des membranes PEEK-s-TEAP des échantillons en fonction de la quantité d'APTMOS introduite. La capacité d'échange cationique des membranes hybrides diminue de façon linéaire lorsque la quantité d'APTMOS augmente.

Cependant, les valeurs de la figure 4 montrent que la capacité d'échange cationique expérimentale pour tous les échantillons est légèrement supérieure à la capacité d'échange cationique calculée. Ces résultats indiquent que toutes les fonctions NH₂ n'ont pas été protonnées.

Une analyse thermogravimétrique du PEEK sulfoné peut être réalisée selon une rampe de chauffage de 10 °C par minute. L'analyse thermogravimétrique peut être utilisée afin de déterminer le contenu en silice des échantillons. Avant l'analyse les membranes sont placées en étuve à 50 °C pendant une heure.

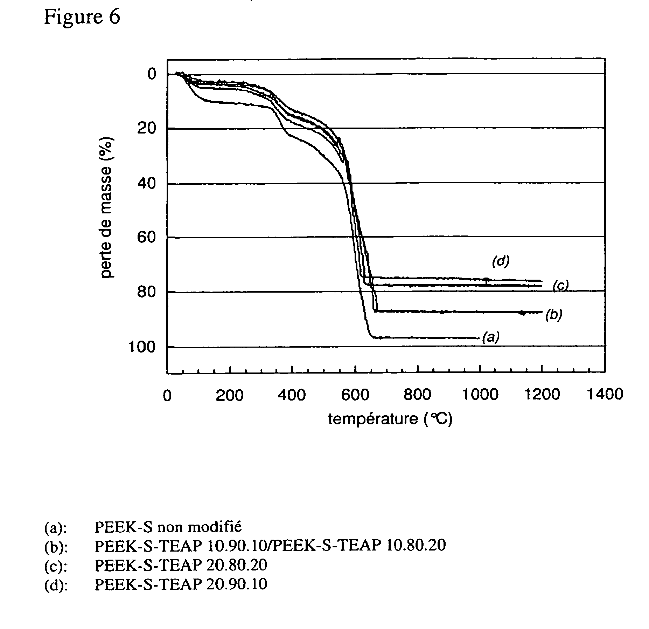

La figure 6 représente les résultats des analyses thermogravimétriques obtenues pour les échantillons des membranes PEEK-s et PEEK-s-TEAP.

L'allure générale des thermogrammes des membranes hybrides est sensiblement la même que celle d'une membrane de PEEK-s non-modifiée. La première perte de masse, qui intervient entre 20 °C et 100 °C correspond à la déshydratation de l'échantillon. On constate cependant que les membranes hybrides présentent une perte d'eau plus faible que celle d'une membrane de polymère pure. La deuxième perte de masse, qui débute autour de 250 °C, correspond à la désulfonation du polymère. La désulfonation des membranes hybrides intervient sensiblement plus tôt que celle du polymère pure. La décomposition du polymère intervient aux environs de 400 °C quelque soit l'échantillon.

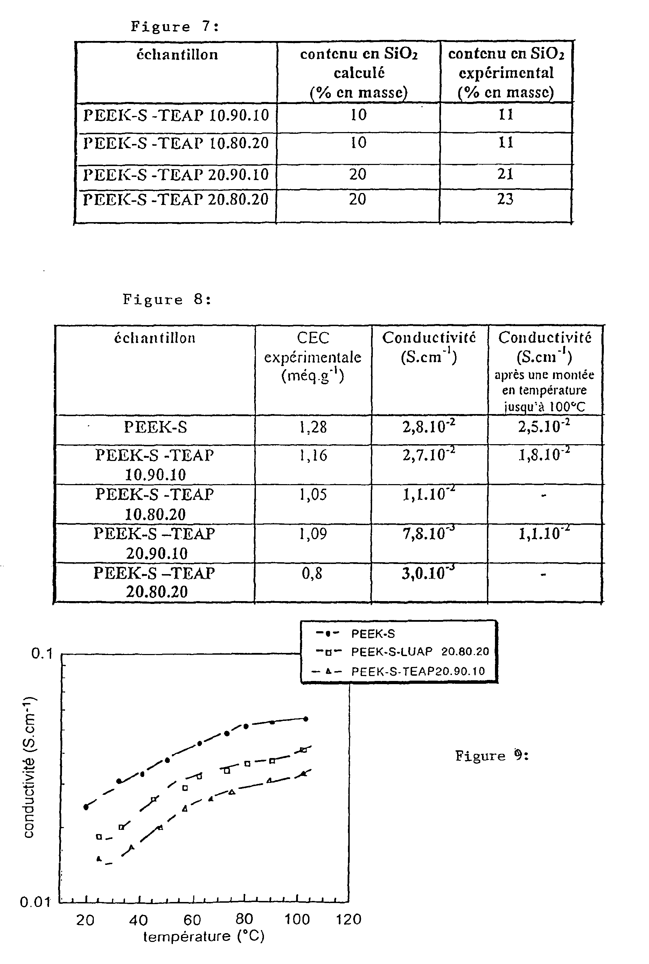

Le résidu de combustion de polymère à 1200 °C permet d'évaluer la quantité du silice contenue dans la membrane hybride. Dans l'hypothèse d'une conversion totale des précurseurs, un contenu théorique en silice a été calculé. Les compositions des membranes hybrides à base de TEOS sont comparées dans la figure 7.

La conductivité électrique des échantillons a été mesurée et la figure 8 représente les valeurs de conductivité obtenues à 20 °C à 100 % d'humidité relative.

Afin de déterminer l'évolution des propriétés de conduction des membranes PEEK-s-silice avec la température, les mesures de conductivité à 20 °C ont été complétées par des mesures de conductivité à température variable, entre 20 et 100°C, pour 100 % d'humidité relative. Sur la figure 9 on a représenté l'évolution des conductivités en fonction de la température des membranes de différents échantillons.

Dans le domaine de température de l'étude, on observe un comportement général de la conductivité des membranes hybrides quasiment identique dans les mêmes conditions, à celui de PEEK-s avant introduction de charge minérale.

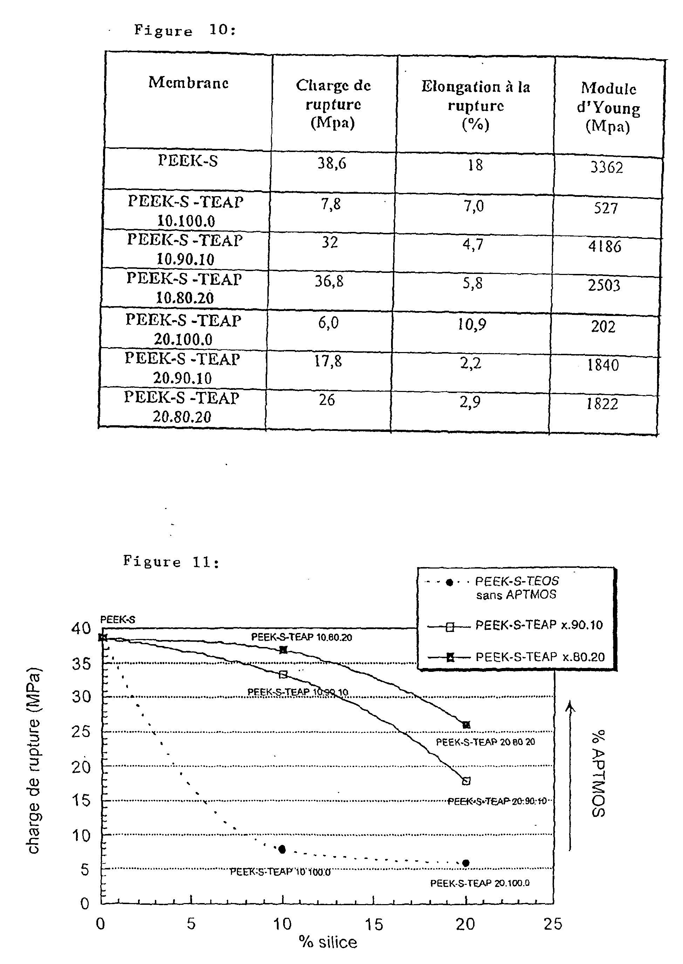

L'introduction d'aminophenylsiloxane dans les membranes PEEK-s-TEAP établit un lien entre la matrice organique et le réseau de silice via l'interaction ionique entre les groupements SO₃⁻ et NH3⁺. Afin d'évaluer l'influence de cette réticulation ionique sur les propriétés mécaniques des membranes PEEK-s-silice, des essais de traction ont été effectués. La figure 10 comprend un tableau qui récapitule les valeurs obtenues avec les différents échantillons du système hybride lors des tests de charge de rupture.

La figure 11 montre un graphique sur lequel les variations de la charge de rupture des membranes hybrides en fonction du contenu en silice et de la quantité d'APTMOS sont reportées.

Pour un contenu en silice donné, les charges de rupture des membranes hybrides incluant APTMOS se situent entre les deux valeurs extrêmes de rupture de charge de PEEK-s et des membranes hybrides sans APTMOS. Cette évolution met en évidence l'influence de la réticulation ionique dans les membranes hybrides sur le maintien des propriétés mécaniques de la matrice organique non modifiée.

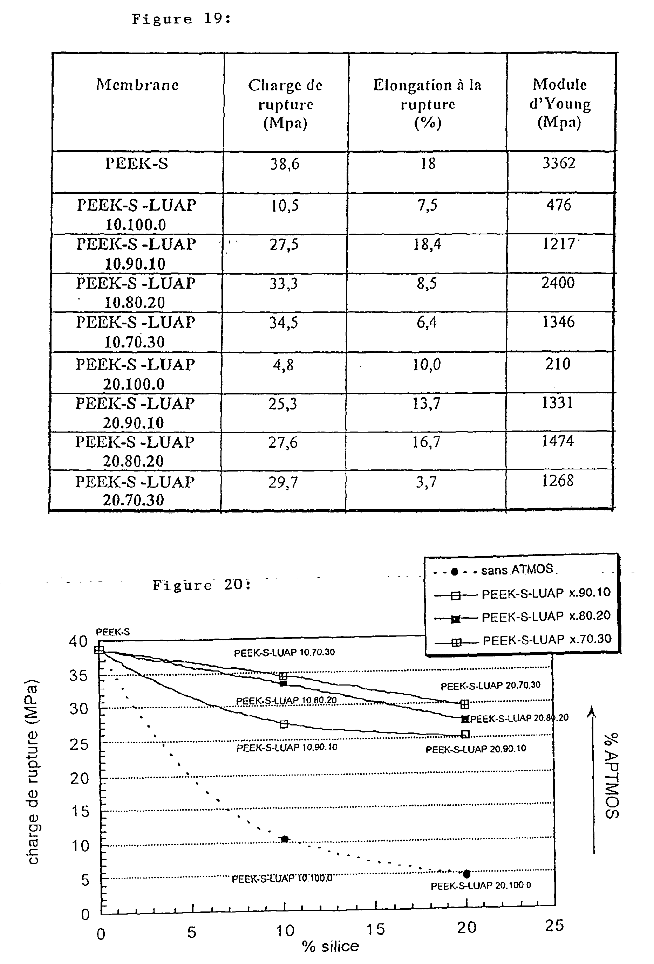

Les valeurs d'élongation maximales données dans le tableau de la figure 20 confirment que la rigidité de la membrane augmente à l'introduction de silice. L'introduction d'APTMOS accentue ce phénomène.

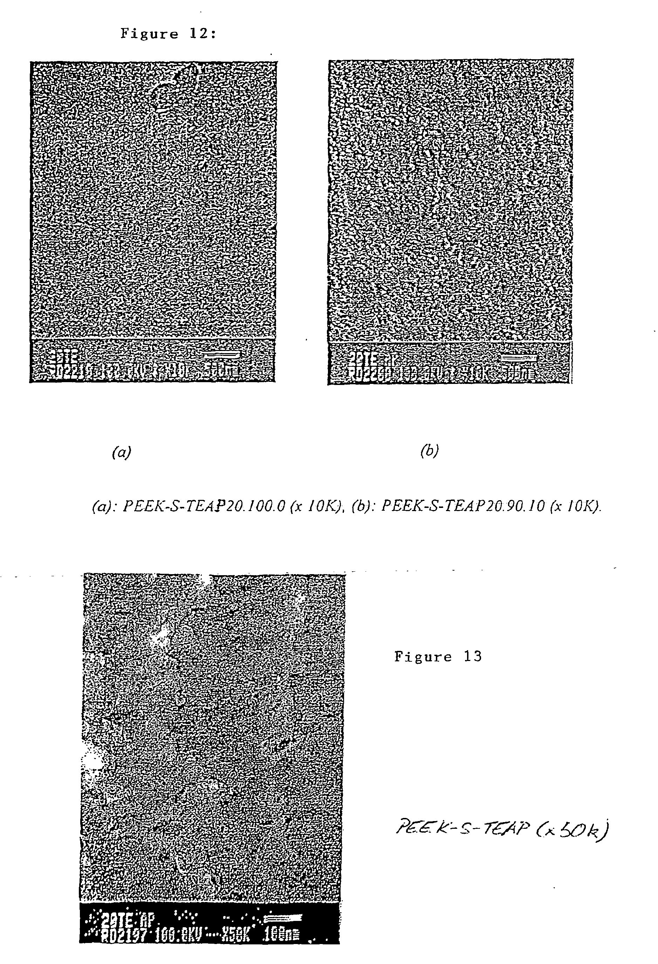

L'influence d'APTMOS sur la dispersion des particules de silice pour des membranes hybrides PEEK-s-TEAP a été analysée par microscopie électronique de transmission et est représenté sur la Figure 12. La micrographie d'une section de membrane est reproduite sur la Figure 12(a) pour une membrane PEEK-s-TEAP 20.100.0 et sur la Figure 12(b) pur une membrane PEEK-s-TEAP 20.90.10. Les deux membranes ont la même teneur en poids de silice. Sous le même grossissement (x10.000) on distingue des agrégats localisés dans l'échantillon (a) sans APTMOS, tandis que l'échantillon (b) préparé en présence d'APTMOS comme dispersant, aucune agrégation de particules est observée. Dans le second cas il existe donc un réseau interpénétré de fibres de polymère et de silice.

Sous un grossissement plus élevée (x50.000) représenté sur la Figure 13 l'échantillon PEEK-s-TEAP 20.90.10 présente de très petites particules de silice qui semblent s'organiser selon un réseau en bandes de 10nm de largeur. On observe qu'un taux croissant d'APTMOS comme précurseur dans la réaction sol-gel provoque une diminution de la taille des particules de silice.

### 2^{ième} groupe d'exemples.

### Particules de silice de taille nanométrique disposant d'une surface à caractère basique

Ce deuxième group d'exemples se réfère à des systèmes procédant à un transfert de nanoparticules de silice depuis une solution colloïdale aqueuse vers une solution polymère. La solution polymère étant par exemple une solution dans NMP. Des particules de silice en suspension colloïdale sont commercialisées sous le nom LUDOX (R) et LUDOX LS (R) par la société Du Pont de Nemours. De tels particules de silice en suspension colloïdale n'ont pas de surface inteme, et elles ne sont pas cristallines. Elles sont dispersées dans un milieu alcalin et sont porteuses d'une charge négative. Cette charge négative engendre la répulsion entre les particules et stabilise la forme colloïdale.

L'addition de LUDOX à la solution de polymère est suivie de l'évaporation du solvant de point d'ébullition le plus bas. Au cours de l'évaporation de l'eau, les particules de silice sont transférées de la phase aqueuse à la phase organique sans agrégation. L'obtention d'une dispersion optimale est favorisée par la présence d'APTMOS. Les quantités requises de LUDOX et d'APTMOS, additionnées de NMP, sont ajoutées à la solution de polymère, à 10% en poids de PEEK-s dans NMP. La solution est agitée et chauffée jusqu'a transfert complet de phase, et l'obtention d'une solution homogène, à partir de laquelle sera préparée la membrane hybride.

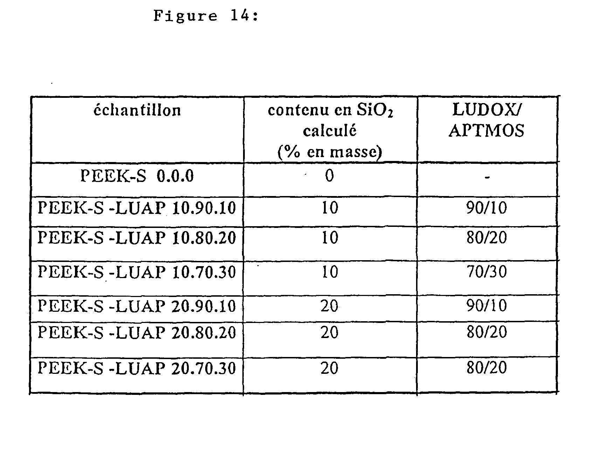

Différents échantillons de composition variable sont présenté par la suite dans le cadre de cet exemple. Les échantillons sont notés PEEK-s-LUAP x.y.z; x étant le pourcentage massique en poids de silice contenu dans l'échantillon, y/z étant le rapport entre LUDOX et APTMOS utilisé. Les compositions des échantillons sont repris dans la figure 14.

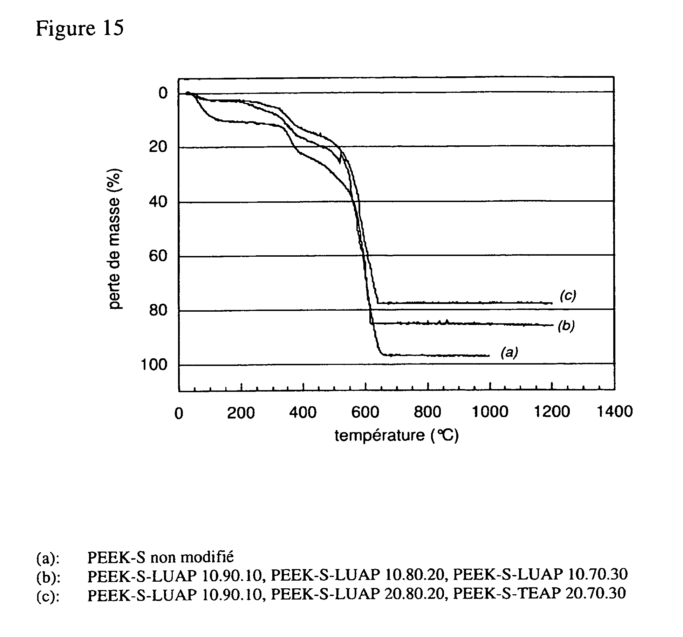

La figure 15 représente les résultats de l'analyse thermogravimétrique des membranes PEEK-s-silice à base de LUDOX. Comme pour l'exemple 1, les membranes composites présentent le même profil de perte de masse que le polymère pur. On constat cependant une perte en eau plus faible des membranes hybrides. Elles perdent, entre 20 °C et 100°C, environ 2 à 3 % d'eau, contre 12 % dans le cas de la membrane de PEEK-s-pure. La perte de groupements sulfoniques débute vers 230 °C pour les échantillons PEEK-s-TEAP. La température de décomposition du polymère pur n'est pas modifiée dans le cas des membranes hybrides et se trouve à 400 °C.

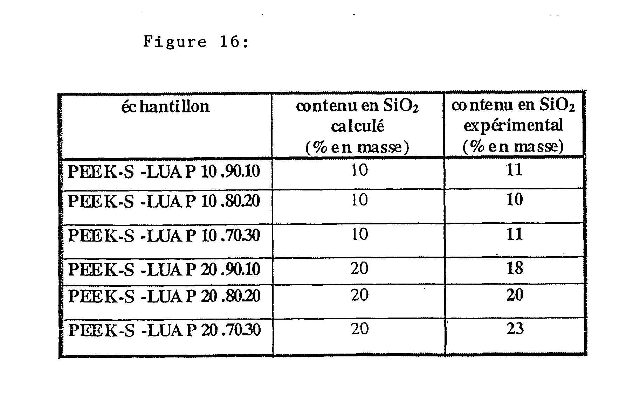

La composition expérimentale de membranes hybrides a été calculée à partir d'un résidu de combustion constitué de silice. La composition des membranes PEEK-s-LUAP est présentée dans le tableau de la figure 16.

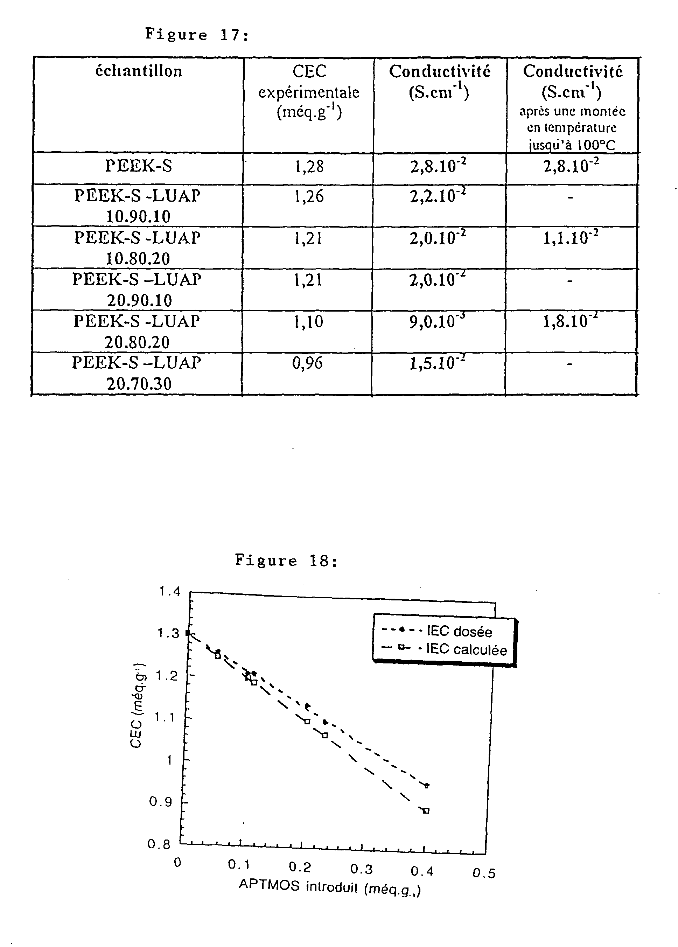

On constate que pour ces membranes la capacité d'échanges cationiques diminue linéairement quand la quantité d'APTMOS introduite augmente (Tableau de la figure 17). L'écart entre les valeurs de capacité d'échange cationique expérimentale et calculés montre que le transfert de protons entre les fonctions aminophényles et sulfoniques n'est pas total. La coexistence de groupement NH3+ donneur de protons et de groupement NH₂ accepteur de protons devrait favoriser la conduction protonique. La figure 18 représente la capacité d'échange cationique en fonction de la quantité d'APTMOS introduit.

Le comportement de la conductivité électrique en fonction de la température a déjà été décrit dans le cadre de l'exemple 1 sur la figure 9.

Les résultats d'essais mécaniques réalisés sur ces membranes composites sont rassemblés dans le tableau de la figure 19. On peut observer des évolutions identiques en terme de rupture de charge et d'élongation maximum pour les membranes à base de LUDOX que pour l'exemple 1. La charge de rupture diminue avec la charge en silice, mais peut être restaurée de manière significative dès l'introduction d'une faible quantité d'APTMOS. On observe ainsi une charge de rupture restaurée à 71 % pour PEEK-s-LUAP 10.90.10 et jusqu' à 90 % pour PEEK-s-LUAP 10.70.30. L'évolution de la charge de rupture avec la charge en silice et avec la quantité d'APTMOS est représentée sur le graphique de la figure 20 qui permet de mettre en évidence l'influence de la réticulation ionique sur les propriétés mécaniques des membranes hybrides à base de LUDOX.

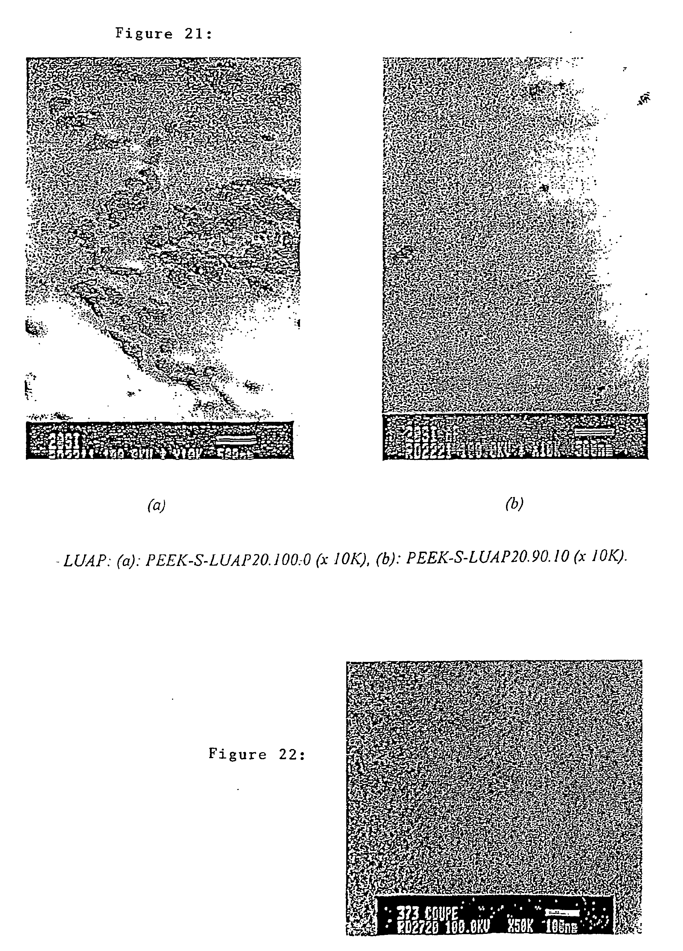

L'influence de l'introduction d'APTMOS sur la "morphologie" d'une coupe à travers une membrane hybride obtenue à partir de LUDOX peut être visualisée par les figures 21 (a) et 21 (b). La figure 21 (a) montre le résultat d'une microscopie électronique à transmission à travers une membrane PEEK-s-LUAP 20.100.0 et la figure 21 (b) la même microscopie d'une membrane PEEK-s-LUAP 20.90.10. Les deux microscopies ont été effectuées à un agrandissement x10.000. On constate en comparant les deux figures que la dispersion du silice est nettement améliorée par l'introduction d'APTMOS. Tandis qu'on distingue des agrégats de particules dans la membrane ne contentant pas du dispersant, l'échantillon incluant APTMOS présente une dispersion quasiment homogène, où seul quelques agrégats demeurent. En se basant sur des études de microscopie de membrane de composition LUDOX/APTMOS variable on peut observer qu'un échantillon PEEK-s-LUAP 10.80.20 donne une dispersion de silice presque parfaitement homogène. Il ne subsiste aucun agrégat et l'observation sous le grossissement x50.000 relève des particules de silice individualisés, d'environ 10 nm. Cette taille de particules est en accord avec la taille de particules annoncée pour la solution commerciale de LUDOX. On peut donc réaliser un transfert de particules sans agglomération de particules pour un rapport LUDOX à l'APTMOS correspondant à 80:20. Une vue à l'agrandissement x50.000 de PEEK-s-LUAP 10.80.20 se trouve sur la figure 22.

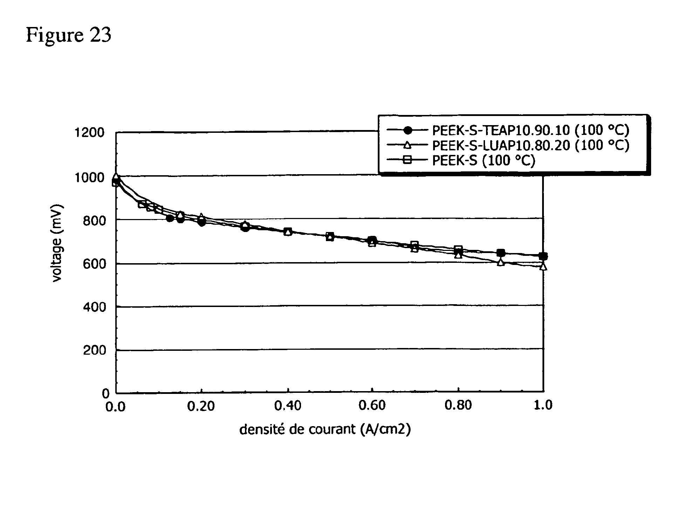

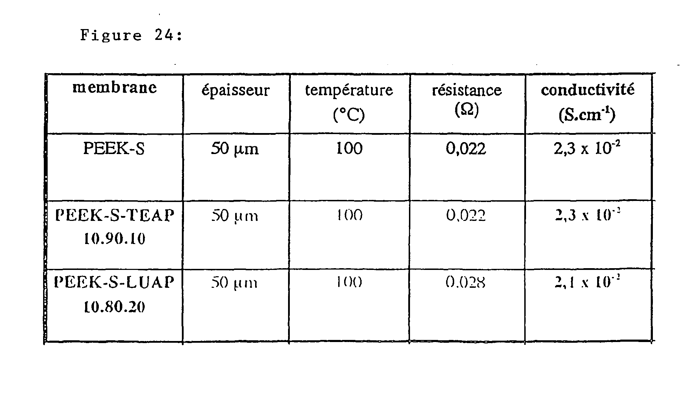

Les performances des membranes composites préparées à partir de TEOS et LUDOX ont été évaluées. La figure 23 donne les courbes de polarisation enregistrées pour les membranes composites contenant 10 % de silice et pour lesquelles on a observé la meilleure dispersion du composant dans la matrice organique. Ces mesures ont été réalisées pour des membranes de 50 µm d'épaisseur et pour des pressions des gaz H₂ et O₂ de 3,6 bars. La température d'humidification des gaz est de 90 °C. Le tableau de la figure 24 donne des valeurs de la résistance et de la conductivité de membranes en pile à combustible à 100°C.

### 3^{ième} groupe d'exemples.

### Structure poreuse inorganique.

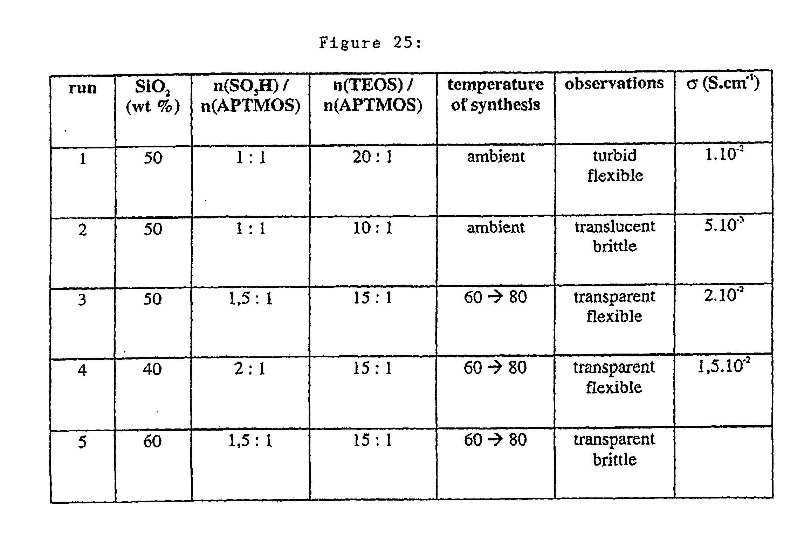

Le tableau de la figure 25 montre des résultats obtenus avec des grandes concentrations en silice donc en métal oxyde. On obtient alors des structures où on dispose d'un matériau hybride avec un substrat inorganique qui est interpénétré par le polymère. Avec des teneurs en silice au delà de 25 % -masse et en utilisant des solvants avec grande constante diélectrique, qui permettent la solvation de paires d'ions avec une interactions électrostatique forte on obtient les résultats du tableau. Elles empêchent donc l'aggregation de paires ioniques. En utilisant NMP (N-méthyl-pyrrolidone) ou DMF (di-méthyl-formamide) avec des constantes diélectriques relatives de 30,2 et de 37,8 respectivement on peut observer une séparation des phases. En utilisant des solvants disposant d'une constante diélectrique encore plus élevées tel que la tétraméthylurée ou DMSO (di-méthyl-sulfe-oxyde) ayant une constante diélectrique de 48.9, l'homogénéité de la dispersion de la silice est plus grande. La figure 25 montre l'influence du taux d'aminopropyltriéthoxysilane sur la dispersion de silice à des taux de 60 % masse de silice. La source de silice étant dans chacun des cas le tetraéthoxysilane (THEOS). Dans le tableau est repris le taux en pourcentage en masse de silice, et le résultat obtenu selon la figure 25 montre qu'on obtient des membranes transparentes et flexibles à partir d'une certaine région et avec un nombre décroisant des fonctions amino. En entrant dans le domaine de la séparation des phases on obtient une membrane opaque et mécaniquement solide. Juste en dessous du seuil, ces systèmes hybrides ont des conductivités électriques égales ou seulement légèrement inférieures à cell du polymère PEEK-s sans silice : (meilleures que 10⁻² Scm⁻¹ à 100 % humidité relative et 25 °C).

Dans le tableau de la figure 25 sont aussi repris les conditions de formation de la co-condensation du produit. La température de synthèse se trouve dans le domaine allant de 60 à 80 °C, mais elle peut se trouver aussi à une température ambiante.

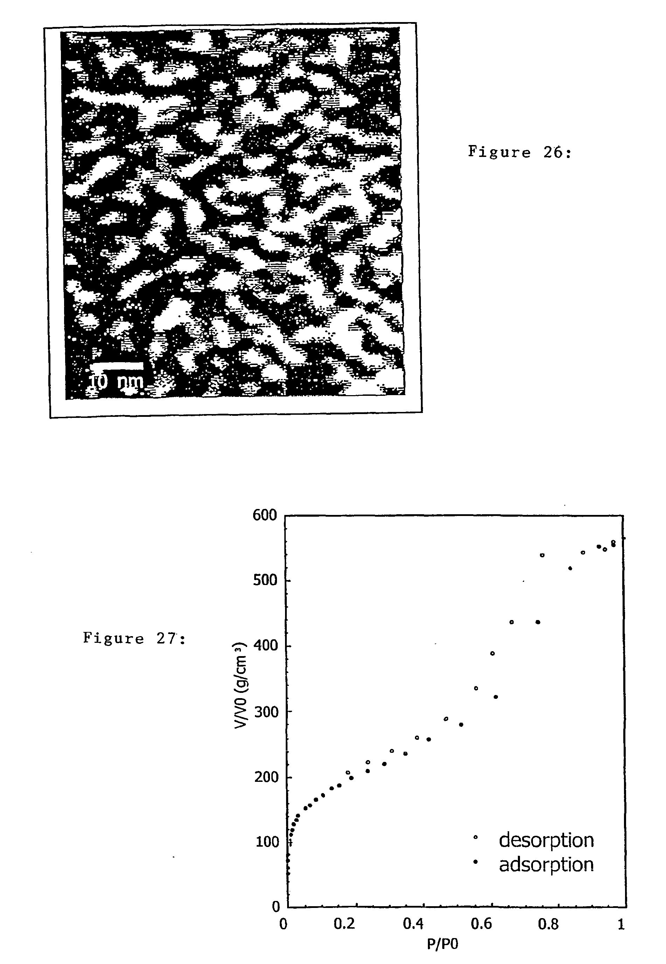

La figure 26 est une observation par microscopie à transmission d'électrons (TEM) montrant des arrangements morphologiques très différents par rapport aux résultats selon les figures 1 à 24 (Exemples I et II). La silice est représenté par les zones claires, le fond sombre de l'image correspondant aux zones du polymère organique intercalé. On trouve une taille des domaines plus petite que 5nm. Dans la phase à une relativement faible teneur en APTMOS on obtient des grains microscopiques de silice à alignés. Une structure poreuse dans le stade naissant et des particules de silice accompagnées de PEEK sulfoné peuvent apparaître. Ces systèmes là présentent une résistance mécanique très grande par rapport aux membranes préparées avec des taux de silice inférieur. La figure 26 montre une telle prise de vue.

Dans le cas d'observation de membranes transparentes on ne percoit plus des particules de silice, même au plus grand agrandissement.

On observe une matrice mésoporeuse de silice interpénétrée par le PEEK sulfoné. En peut observer une intégration homogène des composantes organiques et inorganiques. Les réseaux de silice et de PEEK-sulfoné s'interpénètrent en formant des domaines co-continues avec des dimensions similaires, la dimension la plus petite de ces domaines se trouvant à un niveau en dessous de 4 nm. La silice s'est localisée dans les régions hydrophiles du polymère. En procédant à une analyse du système en calcinant le polymère, il reste une structure poreuse qui constitue une réplique de la structure polymère caractérisée par une adsorption et une désorption d'azote.

La figure 27 montre les isothermes obtenues avec la méthode BET.. On observe alors par l'analyse des isothermes que le silice a une très grande surface, qui peut se trouver autour de 700 m²/g⁻¹. La forme de l'isotherme est typique d'un solide mésoporeux avec une distribution des pores étroite et se trouvant dans le domaine allant de 3,5 à 4 nm. Cela est en accord avec les photographies de microscopie à transmission d'électrones (TEM). Le volume des pores des spectres d'absorption et de desorption de la mesure permettent d'évaluer la taille des pores a un volume de 0,6 cm³g⁻¹ et a un diamètre des pore d'environs 3,4 à 4,5 nm. La mesure représentée a éte pris a une teneur en silice de 50% et pour une membrane d'une conductivité de 2 10⁻² Scm⁻¹ identique à celle du polymère sulfoné pur.

## Revendications

1. Matériau hybride comportant un polymère ayant des groupes acides, ce matériau hybride contenant un composant oxyde métallique disposant d'au moins deux MeₓO_{y} par molécule, chaque molécule du composant oxyde métallique contient au moins un groupement fonctionnel basique dû à un groupe contenant de l'azote, le composant oxyde métallique est formé de particules d'oxyde métallique, permettant une interaction et une relation spatiale avec les groupes acides du polymère.

2. Matériau hybride selon la revendication 1, **caractérisé en ce que** le matériau hybride forme une matrice polymère.

3. Matériau hybride selon une des revendications précédentes, **caractérisé en ce que** les groupes acides sont des groupes sulfoniques.

4. Matériau selon une des revendications précédentes, **caractérisé en ce que** le matériau polymère acide est un polymère organique.

5. Matériau selon une des revendications précédentes, **caractérisé en ce que** le matériau polymère acide est un polymère organique exempt de fluor.

6. Matériau hybride selon une des revendications précédentes, **caractérisé en ce que** le matériau polymère acide est formé à partir d'au moins un des matériaux suivantes: polyhétérocycliques, polyaromatiques, polysulfones et polyaryléthercétones sulfoniques.

7. Matériau hybride selon une des revendications précédentes, **caractérisé en ce que** le groupement fonctionnel basique est une amine.

8. Matériau hybride selon la revendication 7, **caractérisé en ce que** le groupement fonctionnel basique est dérivée d'aminophényltriméthoxysilane (APTMOS).

9. Matériau hybride selon une des revendications précédentes, **caractérisé en ce que** le composant oxyde métallique est présent sous forme de chaînes réseaux au moins dimériques.

10. Matériau hybride selon la revendication 9, **caractérisé en ce que** les chaînes réseaux sont polymériques.

11. Matériau hybride selon une des revendications précédentes, **caractérisé en ce que** le diamètre des particules oxyde métallique est inférieur à 50 nm.

12. Matériau hybride selon la revendication 11, **caractérisé en ce que** le diamètre des particules oxyde métallique est inférieur ou égal à 10 nm.

13. Matériau hybride selon une des revendications précédentes, **caractérisé en ce que** les particules d' oxyde métallique sont enrobés d'une couche d'épaisseur monomérique de molécules disposant d'un groupe fonctionnel basique.

14. Matériau hybride selon la revendication 13, **caractérisé en ce que** le groupe fonctionnel contient un dérivé de l'aminophénylsilane.

15. Matériau hybride, selon une des revendications précédentes, **caractérisé en ce que** la relation spatiale entre un groupe acide du matériau polymère et le composant oxyde métallique est une interaction forte entre le groupe fonctionnel dudit composant et le groupe sulfonate du polymère.

16. Matériau hybride selon une des revendications précédentes, **caractérisé en ce que** la teneur en oxyde métallique est entre 1 % et 35 % masse.

17. Matériau hybride selon la revendication 1, **caracterisé en ce que** le matériau hybride comporte un substrat inorganique interpénétré par le polymère.

18. Matériau hybride selon la revendication 17, **caractérisé en ce que** la teneur en métal oxide est entre 30 % et 60 % masse.

19. Matériau hybride selon une des revendications 1, 17 ou 18, **caractérisé en ce que** le matériau hybride comporte un substrat inorganique poreux interpénétré par un polymère conducteur ionique.

20. Matériau hybride selon une des revendications 17 à 19, **caractérisé en ce que** le substrat inorganique est le produit d'une co-condensation d'un tetraalcoxyde de métal et d'un trialcoxymétal fonctionnalisé, le métal et l'oxyde métallique étant la silice et un silane respectivement.

21. Matériau hybride selon la revendication 20, **caractérisé en ce que** la co-condensation a lieu en présence d'un polymère ionique.

22. Matériau hybride selon la revendication 21, **caractérisé en ce que** le polymère ionique appartient à une famille de polymères conducteurs ou ionomères aromatiques ou hétérocycliques.

23. Matériau hybride selon les revendications 17 à 22, **caractérisé en ce que** le substrat inorganique poreux est le produit d'une co-condensation dans une solution de polymère de tetraalcoxysilane et de trialcoxysilane fonctionnalisé par des groupes organiques basiques en présence d'un ionomère.

24. Matériau hybride selon la revendication 21, **caractérisé en ce que** le polymère ionique est un ionomère choisi parmi le groupe des ionomères sulfonés, phosphorés ou carboxylés.

25. Matériau hybride selon les revendications 23 à 24, **caractérisé en ce que** les groupes organiques basiques sont choisis parmi les groupes alkyle amino ou aryle amino.

26. Matériau hybride selon les revendications 23 à 25, **caractérisé en ce que** les groupes alcoxy sont choisis parmi les membres du groupe méthoxy, éthoxy et butoxy.

27. Matériau hybride selon les revendications 19 à 26, **caractérisé en ce que** le substrat inorganique est poreux et comporte une micro-infrastructure interpénétrée avec le conducteur ionique.

28. Matériau hybride selon la revendication 27, **caractérisé en ce que** la micro-infrastructure sont des pores, la taille des pores se trouvant entre 1 nm et 10 nm.

29. Matériau hybride, selon une des revendications précédentes, **caractérisé en ce que** l'oxyde métallique est choisi d'un oxyde de Zr, Ti et d'un oxyde de Si.

30. Matériau hybride, selon une des revendications précédentes **caractérisé en ce qu'**elle est soluble dans un solvant polaire.

31. Matériau hybride, selon une des revendications précédentes, **caractérisé en ce que** le matériau hybride est une membrane.

32. Utilisation du matériau hybride, selon la revendication 31, dans une membrane servant au transport cationique en milieux aqueux.

33. Matériau hybride selon la revendication 30, **caractérisé en ce qu'**il s'agit d'une membrane de pile à combustible.

34. Pile à combustible, **caractérisé en ce que** au moins une membrane est composée d'un matériau hybride selon une des revendications 1 à 33.

35. Pile à combustible selon la revendication 34, **caractérisé en ce que** la pile à combustible travaille au méthanol et à une température plus élevée que 100 °C.

36. Procédé de fabrication d'un matériau hybride selon une des revendications 1 à 33, **caractérisé en ce que** le matériau polymère disposant de groupes acides est melangé avec le composant oxyde métallique et/ou avec des précurseurs du composant en présence d'au moins un solvant, le composant oxyde métallique et/ou au moins un de ses précurseurs disposant d'un groupe fonctionnel basique dû à un groupe contenant de l'azote permettant une interaction avec un groupe acide du matériau polymère, de manière à ce que l'interaction et/ou la formation du composant oxyde métallique a lieu en proximité immédiate du groupe acide.

37. Procédé selon la revendication 36, **caractérisé en ce que** le matériau polymère est mis en solution dans au moins un solvant, la mise en solution s'éffectuant sous gaz inerte et à une température d'environ 130 °C.

38. Procédé selon une des revendications 36 ou 37, **caractérisé en ce que** le composant oxyde métallique et/ou ces précurseurs sont mis en solution dans au moins un solvant.

39. Procédé selon une des revendications 36 à 38, **caractérisé en ce que** les précurseurs du composant oxyde métallique se trouvent conjointement dans une solution avec au moins un solvent.

40. Procédé selon une des revendications 36 à 39, **caractérisé en ce qu'**une suspension de composant oxyde métallique et/ou une solution de précurseurs dudit composant est ajoutée à une solution de matériau polymère acide et une homogénéisation du mélange est effectuée.

41. Procédé selon une des revendications 36 à 40, **caractérisé en ce que** le moins un solvant est un solvant polaire aprotique.

42. Procédé selon une des revendications 36 à 41, **caractérisé en ce** la interaction et/ou la formation s'effectue selon une reaction sol-gel, en présence d'eau et d'un catalyseur acide.

43. Procédé selon und des revendications 36 à 42, **caractérisé en ce que** le précurseur dispose d'un groupe fonctionnel et est un alkoxysilan fonctionnalisé (R'O)₃SiR" ou (R'O)₂SiR"₂, les groupes R' étant des groupes alkyles et les groupes R" étant des groupes fonctionnels possédant un caractère basique.

44. Procédé selon une des revendications 36 à 43, **caractérisé en ce qu'**un précurseur du composant est un alkoxyde métallique ((RO)ₓM), les groupes R étant des groupes alkyles.

45. Procédé selon la revendication 44, **caractérisé en ce que** le rapport massique précurseur alkoxyde métallique/alkoxysilane fonctionnalisé est au moins de 70/30.

46. Procédé selon une des revendications 36 à 45, **caractérisé en ce que** le composant oxyde métallique est une particule d'oxyde métallique disposant de groupes fonctionnels à sa surface formés à partir d'aminophényltriméthoxysilane (APTMOS).

47. Procédé selon la revendication 46, **caractérisé en ce que** le rapport massique entre les particules de oxyde métallique et l'alkoxysilane fonctionnalisé est plus élevé que 60/40.

48. Procédé selon une des revendications 36 à 47, **caractérisé en ce qu'**après l'interaction avec et/ou la formation du composant oxyde métallique l'extraction du solvant est effectuée.

49. Procédé selon une des revendications 36 à 48, **caractérisé en ce que** préablement à l'extraction du solvant la formation d'une membrane est effectué par une coulée du mélange sur un support.

50. Procédé de fabrication selon une des revendications 36 à 40, **caractérisé en ce que** la membrane avec son substrat poreux est produite par la co-condensation de tetraalcoxyde de silicium et de trialcoxysilane fonctionalisé dans une solution de polymère conducteur ionique.

51. Procédé de fabrication selon la revendication 50, **caractérisé en ce que** la formation de la membrane a lieu en absence d'une imprégnation du substrat inorganique par un polymère conducteur ionique.

52. Procédé de fabrication selon la revendication 51, **caractérisé en ce que** le polymère conducteur ionique appartient à une des familles de polymères conducteurs, ionomères aromatiques ou ionomères hétérocycliques.

53. Procédé de fabrication selon la revendication 52, **caractérisé en ce que** le polymère conducteur ionique est choisi parmi le groupe des ionomères sulfonés, phosphorés ou carboxylés.

54. Procédé de fabrication selon la revendication 53, **caractérisé en ce que** le polymère conducteur ionique est un membre de la famille des polyéthercétones sulfonés.

55. Procédé de fabrication selon les revendications 50 à 54, **caractérisé en ce que** la co-condensation a lieu dans un solvant aprotique de constante diélectrique relative au moins supérieure à 37.

## Claims

1. Hybrid material comprising a polymer having acid groups, this hybrid material containing a metal oxide component having at least two MeₓO_{y} per molecule, each molecule of the metal oxide component contains at least one basic functional group due to a group containing nitrogen, the metal oxide component is formed from particles of metal oxide, allowing an interaction and a spatial relationship with the acidic groups of the polymer.

2. Hybrid material according to Claim 1, **characterized in that** the hybrid material forms a polymer matrix.

3. Hybrid material according to either of the preceding claims, **characterized in that** the acidic groups are sulphonic groups.

4. Material according to one of the preceding claims, **characterized in that** the acidic polymer material is an organic polymer.

5. Material according to one of the preceding claims, **characterized in that** the acidic polymer material is a fluorine-free organic polymer.

6. Hybrid material according to one of the preceding claims, **characterized in that** the acidic polymer material is formed from at least one of the following materials: polyheterocyclics, polyaromatics, polysulphones and sulphonated polyaryl ether ketones.

7. Hybrid material according to one of the preceding claims, **characterized in that** the basic functional group is an amine.

8. Hybrid material according to Claim 7, **characterized in that** the basic functional group is derived from aminophenyltrimethoxysilane (APTMOS).

9. Hybrid material according to one of the preceding claims, **characterized in that** the metal oxide component is present in the form of network chains which are at least dimeric.

10. Hybrid material according to Claim 9, **characterized in that** the network chains are polymeric.

11. Hybrid material according to one of the preceding claims, **characterized in that** the diameter of the metal oxide particles is less than 50 nm.

12. Hybrid material according to Claim 11, **characterized in that** the diameter of the metal oxide particles is less than or equal to 10 nm.

13. Hybrid material according to one of the preceding claims, **characterized in that** the metal oxide particles are coated with a layer, of monomeric thickness, of molecules having a basic functional group.

14. Hybrid material according to Claim 13, **characterized in that** the functional group contains an aminophenylsilane derivative.

15. Hybrid material according to one of the preceding claims, **characterized in that** the spatial relationship between an acidic group of the polymer material and the metal oxide component is a strong interaction between the functional group of said component and the sulphonate group of the polymer.

16. Hybrid material according to one of the preceding claims, **characterized in that** the metal oxide content is between 1 mass% and 35 mass%.

17. Hybrid material according to Claim 1, **characterized in that** the hybrid material comprises an inorganic substrate interpenetrated with the polymer.

18. Hybrid material according to Claim 17, **characterized in that** the metal oxide content is between 30 mass% and 60 mass%.

19. Hybrid material according to one of Claims 1, 17 and 18, **characterized in that** the hybrid material comprises a porous inorganic substrate interpenetrated with an ionic conductive polymer.

20. Hybrid material according to one of Claims 17 to 19, **characterized in that** the inorganic substrate is the product of a co-condensation of a metal tetraalkoxide and of a functionalized trialkoxy metal, the metal and the metal oxide being silica and a silane, respectively.

21. Hybrid material according to Claim 20, **characterized in that** the co-condensation is carried out in the presence of an ionic polymer.

22. Hybrid material according to Claim 21, **characterized in that** the ionic polymer belongs to a family of conductive polymers or ionomers which are aromatic or heterocyclic.

23. Hybrid material according to Claims 17 to 22, **characterized in that** the porous inorganic substrate is the product of a co-condensation in a solution of polymer of tetraalkoxysilane and of trialkoxysilane functionalized with basic organic groups in the presence of an ionomer.

24. Hybrid material according to Claim 21, **characterized in that** the ionic polymer is an ionomer chosen from the group of sulphonated, phosphorated or carboxylated ionomers.

25. Hybrid material according to Claim 23 or 24, **characterized in that** the basic organic groups are chosen from alkylamino or arylamino groups.

26. Hybrid material according to Claims 23 to 25, **characterized in that** the alkoxy groups are chosen from the members of the methoxy, ethoxy and butoxy group.

27. Hybrid material according to Claims 19 to 26, **characterized in that** the inorganic substrate is porous and comprises a microinfrastructure interpenetrated with the ionic conductor.

28. Hybrid material according to Claim 27, **characterized in that** the microinfrastructure is pores, the size of the pores being between 1 nm and 10 nm.

29. Hybrid material according to one of the preceding claims, **characterized in that** the metal oxide is chosen from a Zr oxide, a Ti oxide and an Si oxide.

30. Hybrid material according to one of the preceding claims, **characterized in that** it is soluble in a polar solvent.

31. Hybrid material according to one of the preceding claims, **characterized in that** the hybrid material is a membrane.

32. Use of the hybrid material according to Claim 13, in a membrane used for cationic transport in aqueous media.

33. Hybrid material according to Claim 30, **characterized in that** it is a fuel cell membrane.

34. Fuel cell, **characterized in that** at least one membrane is composed of a hybrid material according to one of Claims 1 to 33.

35. Fuel cell according to Claim 34, **characterized in that** the fuel cell operates with methanol and at a temperature above 100°C.

36. Method for manufacturing a hybrid material according to one of Claims 1 to 33, **characterized in that** the polymer material having acidic groups is mixed with the metal oxide component and/or with precursors of the component in the presence of at least one solvent, the metal oxide component and/or at least one of its precursors having a basic functional group due to a group containing nitrogen, allowing an interaction with an acidic group of the polymer material, in such a way that the interaction and/or the formation of the metal oxide component takes place in the immediate proximity of the acidic group.

37. Method according to Claim 36, **characterized in that** the polymer material is dissolved in at least one solvent, the dissolution being carried out under an inert gas and at a temperature of approximately 130°C.

38. Method according to either of Claims 36 and 37, **characterized in that** the metal oxide component and/or its precursors are dissolved in at least one solvent.

39. Method according to one of Claims 36 to 38, **characterized in that** the precursors of the metal oxide component are jointly in a solution with at least one solvent.

40. Method according to one of Claims 36 to 39, **characterized in that** a suspension of metal oxide component and/or a solution of precursors of said component is/are added to a solution of acidic polymer material and the mixture is homogenized.

41. Method according to one of Claims 36 to 40, **characterized in that** the at least one solvent is an aprotic polar solvent.

42. Method according to one of Claims 36 to 41, **characterized in that** the interaction and/or the formation is/are carried out according to a sol-gel reaction, in the presence of water and of an acid catalyst.

43. Method according to one of Claims 36 to 42, **characterized in that** the precursor has a functional group and is a functionalized alkoxysilane (R'O)₃SiR" or (R'O)₂SiR"₂, the R' groups being alkyl groups and the R" groups being functional groups which are basic in nature.

44. Method according to one of Claims 36 to 43, **characterized in that** a precursor of the component is a metal alkoxide ((RO)ₓM), the R groups being alkyl groups.

45. Method according to Claim 44, **characterized in that** the metal alkoxide precursor/functionalized alkoxysilane mass ratio is at least 70/30.

46. Method according to one of Claims 36 to 45, **characterized in that** the metal oxide component is a particle of metal oxide having functional groups at its surface, formed from aminophenyltrimethoxysilane (APTMOS).

47. Method according to Claim 46, **characterized in that** the mass ratio of the metal oxide particles to the functionalized alkoxysilane is greater than 60/40.

48. Method according to one of Claims 36 to 47, **characterized in that**, after the interaction with and/or the formation of the metal oxide component, the extraction of the solvent is carried out.

49. Method according to one of Claims 36 to 48, **characterized in that**, prior to the extraction of the solvent, the formation of a membrane is carried out by pouring the mixture onto a support.

50. Method of manufacture according to one of Claims 36 to 40, **characterized in that** the membrane with its porous substrate is produced by the co-condensation of silicon tetraalkoxide and of functionalized trialkoxysilane in a solution of ionic conductive polymer.

51. Method of manufacture according to Claim 50, **characterized in that** the formation of the membrane is carried out in the absence of impregnation of the inorganic substrate with an ionic conductive polymer.

52. Method of manufacture according to Claim 51, **characterized in that** the ionic conductive polymer belongs to one of the families of conductive polymers, aromatic ionomers or heterocyclic ionomers.

53. Method of manufacture according to Claim 52, **characterized in that** the ionic conductive polymer is chosen from the group of sulphonated, phosphorated or carboxylated ionomers.

54. Method of manufacture according to Claim 53, **characterized in that** the ionic conductive polymer is a member of the family of sulphonated polyether ketones.

55. Method of manufacture according to Claims 50 to 54, **characterized in that** the co-condensation is carried out in an aprotic solvent with a relative dielectric constant which is at least greater than 37.

## Patentansprüche

1. Hybridmaterial, das ein Polymer umfasst, das saure Gruppen aufweist, wobei das Hybridmaterial eine Metalloxid-Komponente aufweist, die mindestens zwei MeₓO_{y} pro Molekül aufweist, wobei jedes Molekül der Metalloxid-Komponente mindestens eine basische funktionelle Gruppe aufweist, die auf einer stickstoffhaltigen Gruppe beruht, wobei die Metalloxid-Komponente von Metalloxid-Partikeln gebildet wird, so dass eine Interaktion und eine räumliche Beziehung mit den sauren Gruppen des Polymers ermöglicht wird.

2. Hybridmaterial nach Anspruch 1, **dadurch gekennzeichnet, dass** das Hybridmaterial eine Polymermatrix bildet.

3. Hybridmaterial nach einem der vorhergehenden Ansprüche, **dadurch gekennzeichnet, dass** die sauren Gruppen Sulfongruppen sind.

4. Material nach einem der vorhergehenden Ansprüche, **dadurch gekennzeichnet, dass** das saure Polymermaterial ein organisches Polymer ist.

5. Material nach einem der vorhergehenden Ansprüche, **dadurch gekennzeichnet, dass** das saure Polymermaterial ein fluorfreies organisches Polymer ist.

6. Hybridmaterial nach einem der vorhergehenden Ansprüche, **dadurch gekennzeichnet, dass** das saure Polymermaterial aus mindestens einem der folgenden Materialien gebildet wird: Polyheterozyklen, Polyaromaten, Polysulfone und sulfonierte Polyaryletherketone.

7. Hybridmaterial nach einem der vorhergehenden Ansprüche, **dadurch gekennzeichnet, dass** die basische funktionelle Gruppe ein Amin ist.

8. Material nach Anspruch 7, **dadurch gekennzeichnet, dass** die basische funktionelle Gruppe ein Aminophenyltrimethoxysilan-Derivat (APTMOS) ist.

9. Hybridmaterial nach einem der vorhergehenden Ansprüche, **dadurch gekennzeichnet, dass** die Metalloxid-Komponente in Form von mindestens dimeren, vernetzten Ketten vorliegt.

10. Hybridmaterial nach Anspruch 9, **dadurch gekennzeichnet, dass** die vernetzten Ketten polymer sind.

11. Hybridmaterial nach einem der vorhergehenden Ansprüche, **dadurch gekennzeichnet, dass** der Durchmesser der Metalloxidpartikel unter 50 nm liegt.

12. Hybridmaterial nach Anspruch 11, **dadurch gekennzeichnet, dass** der Durchmesser der Metalloxidpartikel kleiner oder gleich 10 nm ist.

13. Hybridmaterial nach einem der vorhergehenden Ansprüche, **dadurch gekennzeichnet, dass** die Metalloxidpartikel in eine Schicht von monomerer Dicke von Molekülen eingehüllt sind, die eine basische funktionelle Gruppe aufweisen.

14. Hybridmaterial nach Anspruch 13, **dadurch gekennzeichnet, dass** die funktionelle Gruppe ein Aminophenylsilan-Derivat enthält.

15. Hybridmaterial nach einem der vorhergehenden Ansprüche, **dadurch gekennzeichnet, dass** die Raumbeziehung zwischen einer sauren Gruppe des Polymermaterials und der Metalloxid-Komponente eine starke Interaktion zwischen der funktionellen Gruppe der Komponente und der Sulfongruppe des Polymers ist.

16. Hybridmaterial nach einem der vorhergehenden Ansprüche, **dadurch gekennzeichnet, dass** der Metalloxidgehalt zwischen 1 und 35 Masseprozent liegt.

17. Hybridmaterial nach Anspruch 1, **dadurch gekennzeichnet, dass** das Hybridmaterial ein anorganisches Substrat umfasst, das von dem Polymer durchdrungen ist.

18. Hybridmaterial nach Anspruch 17, **dadurch gekennzeichnet, dass** der Metalloxidgehalt zwischen 30 und 60 Masseprozent liegt.

19. Hybridmaterial nach einem der Ansprüche 1, 17 oder 18, **dadurch gekennzeichnet, dass** das Hybridmaterial ein poröses anorganisches Substrat umfasst, das von einem ionisch leitenden Polymer durchdrungen wird.

20. Hybridmaterial nach einem der Ansprüche 17 bis 19, **dadurch gekennzeichnet, dass** das anorganische Substrat das Produkt einer Kondensation eines Tetraalkoxids eines Metalls und eines funktionalisierten Trialkoxymetalls ist, wobei das Metall und das Metalloxid Silizium und ein Silan sind.

21. Hybridmaterial nach Anspruch 20, **dadurch gekennzeichnet, dass** die Co-Kondensation in Gegenwart eines ionischen Polymers stattfindet.

22. Hybridmaterial nach Anspruch 21, **dadurch gekennzeichnet, dass** das ionische Polymer zur Familie der aromatischen oder heterozyklischen leitenden Polymere oder Ionomere gehört.

23. Hybridmaterial nach einem der Ansprüche 17 bis 22, **dadurch gekennzeichnet, dass** das poröse anorganische Substrat das Produkt einer Co-Kondensation in einer Polymerlösung von Tetraalkoxysilan und mit basischen organischen Gruppen funktionalisiertem Trialkoxysilan in Gegenwart eines Ionomeren ist.

24. Hybridmaterial nach Anspruch 21, **dadurch gekennzeichnet, dass** das ionische Polymer ein Ionomer ist, das aus der Gruppe der sulfonierten, phosphorierten oder carboxylierten Ionomere gewählt ist.

25. Hybridmaterial nach den Ansprüchen 23 bis 24, **dadurch gekennzeichnet, dass** die basischen organischen Gruppen unter den Alkyl-Amino- oder Aryl-Amino-Gruppen gewählt werden.

26. Hybridmaterial nach den Ansprüchen 23 bis 25, **dadurch gekennzeichnet, dass** die Alkoxy-Gruppen in der Gruppe Methoxy, Ethoxy und Butoxy gewählt werden.

27. Hybridmaterial nach den Ansprüchen 19 bis 26, **dadurch gekennzeichnet, dass** das anorganische Substrat porös ist, und eine Mikro-Infrastruktur umfasst, die von dem Ionenleiter durchdrungen ist.

28. Hybridmaterial nach Anspruch 27, **dadurch gekennzeichnet, dass** die Mikro-Infrastruktur aus Poren besteht, wobei die Größe der Poren zwischen 1 nm und 10 nm liegt.

29. Hybridmaterial nach einem der vorhergehenden Ansprüche, **dadurch gekennzeichnet, dass** das Metalloxid unter einem Oxid von Zr, Ti und einem Oxid von Si gewählt wird

30. Hybridmaterial nach einem der vorhergehenden Ansprüche, **dadurch gekennzeichnet, dass** es in einem polaren Lösungsmittel löslich ist.

31. Hybridmaterial nach einem der vorhergehenden Ansprüche, **dadurch gekennzeichnet, dass** das Hybridmaterial eine Membran ist.

32. Verwendung des Hybridmaterials nach Anspruch 31 in einer Membran, die zum Kationentransport in wässrigem Milieu dient.

33. Hybridmaterial nach Anspruch 30, **dadurch gekennzeichnet, dass** es sich um eine Membran einer Brennstoffzelle handelt.

34. Brennstoffzelle, **dadurch gekennzeichnet, dass** mindestens eine Membran aus einem Hybridmaterial nach einem der Ansprüche 1 bis 33 besteht.

35. Brennstoffzelle nach Anspruch 34, **dadurch gekennzeichnet, dass** die Brennstoffzelle mit Methanol und bei einer Temperatur über 100 °C arbeitet.

36. Herstellungsverfahren für ein Hybridmaterial nach einem der Ansprüche 1 bis 33, **dadurch gekennzeichnet, dass** das Polymermaterial, das über saure Gruppen verfügt mit der Metalloxid-Komponente und/oder Vorläufern der Komponente in Gegenwart mindestens eines Lösungsmittels gemischt wird, wobei die Metalloxidkomponente und/oder mindestens einer ihrer Vorläufer eine basische funktionelle Gruppe, die auf einer stickstoffhaltigen Gruppe beruht, aufweisen, die eine Interaktion mit einer sauren Gruppe des Polymermaterials erlaubt, so dass die Interaktion und/oder die Bildung der Metalloxidkomponente in unmittelbarer Nähe der sauren Gruppe stattfindet.

37. Verfahren nach Anspruch 36, **dadurch gekennzeichnet, dass** das Polymermaterial in mindestens einem Lösungsmittel gelöst wird, wobei das Lösen unter Inertgas bei einer Temperatur von etwa 130 °C geschieht.

38. Verfahren nach einem der Ansprüche 36 oder 37, **dadurch gekennzeichnet, dass** die Metalloxidkomponente und/oder ihre Vorläufer in mindestens einem Lösungsmittel aufgelöst werden.

39. Verfahren nach einem der Ansprüche 36 bis 38, **dadurch gekennzeichnet, dass** die Vorläufer der Metalloxid-Komponente zusammen in einer Lösung mit mindestens einem Lösungsmittel sind.

40. Verfahren nach einem der Ansprüche 36 bis 39, **dadurch gekennzeichnet, dass** eine Suspension der Metalloxid-Komponente und/oder eine Lösung der Vorläufer dieser Komponente zu einer Lösung von saurem Polymermaterial hinzugegeben wird und die Mischung homogenisiert wird.

41. Verfahren nach einem der Ansprüche 36 bis 40, **dadurch gekennzeichnet, dass** das mindestens eine Lösungsmittel ein polares aprotisches Lösungsmittel ist.

42. Verfahren nach einem der Ansprüche 36 bis 41, **dadurch gekennzeichnet, dass** die Interaktion und/oder die Bildung nach einer Sol-Gel-Reaktion durchgeführt wird, in Gegenwart von Wasser und einem sauren Katalysator.

43. Verfahren nach einem der Ansprüche 36 bis 42, **dadurch gekennzeichnet, dass** der Vorläufer eine funktionelle Gruppe besitzt und ein funktionalisiertes Alkoxysilan (R'O)₃SiR'' oder (R'O)₂SiR''₂ ist, wobei die Gruppen R' Alkylgruppen sind und die Gruppen R'' funktionelle Gruppen mit basischem Charakter sind.

44. Verfahren nach einem der Ansprüche 36 bis 43, **dadurch gekennzeichnet, dass** ein Vorläufer der Komponente ein metallisches Alkoxid ((RO)ₓM) ist, wobei die Gruppen R Alkylgruppen sind.

45. Verfahren nach Anspruch 44, **dadurch gekennzeichnet, dass** das Massenverhältnis des Metall-Alkoxid-Vorläufers zum funktionalisierten Alkoxysilan mindestens 70/30 ist.

46. Verfahren nach einem der Ansprüche 36 bis 45, **dadurch gekennzeichnet, dass** die Metalloxidkomponente ein Metalloxidpartikel ist, das an seiner Oberfläche funktionelle Gruppen aufweist, die ausgehend von Aminophenyltrimethoxysilan (APTMOS) gebildet wurden.

47. Verfahren nach Anspruch 46, **dadurch gekennzeichnet, dass** das Massenverhältnis zwischen den Metalloxid-partikeln und dem funktionalisierten Alkoxysilan höher ist als 60/40.

48. Verfahren nach einem der Ansprüche 36 bis 47, **dadurch gekennzeichnet, dass** nach Interaktion mit der Metalloxidkomponente und/oder der Bildung der Metalloxidkomponente eine Extraktion des Lösungsmittels durchgeführt wird.

49. Verfahren nach einem der Ansprüche 36 bis 48, **dadurch gekennzeichnet, dass** vor der Extraktion des Lösungsmittels die Bildung einer Membran durch Gießen der Mischung auf ein Trägermaterial durchgeführt wird.

50. Herstellungsverfahren nach einem der Ansprüche 36 bis 40, **dadurch gekennzeichnet, dass** die Membran mit ihrem porösen Substrat durch die Co-Kondensation von Silizium-Tetraalkoxid und funktionalisiertem Trialkoxysilan in einer Lösung eines ionisch leitenden Polymers hergestellt wird.

51. Herstellungsverfahren nach Anspruch 50, **dadurch gekennzeichnet, dass** die Bildung der Membran in Abwesenheit einer Imprägnierung des anorganischen Substrats mit einem ionenleitenden Polymer stattfindet.

52. Herstellungsverfahren nach Anspruch 51, **dadurch gekennzeichnet, dass** das ionenleitende Polymer zu einer der Familien der leitenden Polymere, aromatischen Ionomeren oder heterozyklischen Ionomeren gehört.

53. Herstellungsverfahren nach Anspruch 52, **dadurch gekennzeichnet, dass** das ionisch leitende Polymer aus der Gruppe der sulfonierten, phosphorierten oder carboxylierten Ionomere gewählt wird.

54. Herstellungsverfahren nach Anspruch 53, **dadurch gekennzeichnet, dass** das ionisch leitende Polymer zur Familie der sulfonierten Polyetherketone gehört.

55. Herstellungsverfahren nach Ansprüchen 50 bis 54, **dadurch gekennzeichnet, dass** die Co-Kondensierung in einem aprotischen Lösungsmittel stattfindet, dessen relative Dielektrizitätskonstante mindestens über 37 liegt.
